Europäisches Patentamt

European Patent Office

Office européen des brevets

(19)

(11) **EP 1 024 353 B1**

(12) **FASCICULE DE BREVET EUROPEEN**

(45) Date de publication et mention
de la délivrance du brevet:
**09.11.2005 Bulletin 2005/45**

(51) Int Cl.⁷: **G01M 11/00**

(21) Numéro de dépôt: **00400001.4**

(22) Date de dépôt: **03.01.2000**

(54) **Procédé pour déterminer par réflectométrie, une caractéristique d'une fibre optique**

Verfahren zur reflektrometrischen Bestimmung einer Charakteristik einer optischen Faser

Method for determining by reflectometry a characteristic of an optical fiber

(84) Etats contractants désignés:
**AT BE CH CY DE DK ES FI FR GB GR IE IT LI LU
MC NL PT SE**

(30) Priorité: **28.01.1999 FR 9900937**

(43) Date de publication de la demande:
**02.08.2000 Bulletin 2000/31**

(73) Titulaire: **Draka Comteq B.V.
1018 TX Amsterdam (NL)**

(72) Inventeur: **Piffaretti, José G.
Conover, NC 28613 (US)**

(74) Mandataire: **Blokland, Arie
Algemeen Octrooi- en Merkenbureau,
P.O. Box 645
5600 AP Eindhoven (NL)**

(56) Documents cités:
| | |
|---|---|
| **EP-A- 0 591 818** | **EP-A- 0 936 761** |
| **FR-A- 2 597 986** | **US-A- 5 053 775** |
| **US-A- 5 309 221** | **US-A- 5 455 672** |
| **US-A- 5 592 282** | **US-A- 5 724 126** |
| **US-A- 5 742 722** | |

• **PATENT ABSTRACTS OF JAPAN vol. 017, no.
329 (P-1561), 22 juin 1993 (1993-06-22) & JP 05
040074 A (NIPPON TELEGR & TELEPH CORP),
19 février 1993 (1993-02-19)**

**Description**

L'invention est relative à un procédé pour déterminer, par réflectométrie, une caractéristique d'une fibre optique.

Le débit d'informations transmis par les réseaux de télécommunication augmente continuellement. On utilise donc, dans ces réseaux, de plus en plus de fibres optiques qui permettent de satisfaire ces besoins en haut débit.

Pour chaque fibre optique fabriquée, il faut vérifier ses caractéristiques afin de s'assurer qu'elles répondent aux spécifications. Ces vérifications consistent en plusieurs types de mesures effectuées sur différents appareils. Elles nécessitent de nombreuses manipulations. On comprend qu'ainsi il soit préférable de disposer d'appareils de mesure fournissant simultanément des résultats fiables sur le plus grand nombre possible de caractéristiques.

Les appareils les plus courants sont des réflectomètres ou bancs de rétrodiffusion. Ils permettent de déterminer l'atténuation des fibres monomodes et leur diamètre de mode. Le diamètre de mode représente le diamètre d'un cylindre à l'intérieur duquel la plus grande partie de l'énergie se propage.

La réflectométrie est basée sur le fait qu'une fibre optique diffuse de la lumière dans toutes les directions, notamment vers l'arrière. Ainsi, une impulsion lumineuse de puissance $P_0$ émise au temps t = 0 à une extrémité de la fibre parcourt une distance L pendant un temps $t_1$ et au bout de ce temps $t_1$, sa puissance est $P_0 e^{-\alpha L}$ et au bout du temps $2t_1$, on recueille à la même extrémité de la fibre une impulsion de puissance $\eta P_0 e^{-2\alpha L}$, $\alpha$ étant l'atténuation de la fibre et $\eta$ est son facteur de rétrodiffusion.

Le facteur de rétrodiffusion est (entre autres) inversement proportionnel au carré $w^2$ du diamètre de mode w.

Pour la mesure, on raccorde la première extrémité de la fibre à caractériser à une première fibre de référence (ou fibre étalon) puis, de même, on raccorde la seconde extrémité de cette fibre à caractériser à une seconde fibre de référence.

Les mesures de puissance sont effectuées aux extrémités libres des fibres de référence. Chaque mesure consiste à déterminer la valeur de la puissance rétrodiffusée aux divers points de la fibre à caractériser et des fibres de référence. Une mesure est effectuée à partir de l'extrémité libre de la première fibre étalon et une autre mesure est effectuée à partir de l'extrémité libre de l'autre fibre étalon. Le diamètre de mode est, par exemple, déterminé en représentant les deux mesures de façon telle que les abscisses L aient la même origine dans les deux cas et en considérant, en chaque point, la somme des logarithmes des puissances rétrodiffusées. En effet, en un point donné d'abscisse x, une mesure fournit $\eta P_0 e^{-2\alpha x}$ et l'autre mesure fournit $\eta P_0 e^{-2\alpha(L_1-x)}$, $L_1$ étant la somme des longueurs des fibres de référence et de la fibre à caractériser, on constate que la somme des logarithmes est indépendante de l'abscisse x.

Ce procédé de mesure est particulièrement efficace. Cependant, il est très sensible aux défauts d'alignement entre les fibres de référence et la fibre à caractériser. En effet, les faibles diamètres des fibres monomodes rendent très difficiles la manipulation et l'alignement de ces dernières. Des plus, des vibrations aux raccords provoquent des erreurs de mesures. Pour remédier à ces difficultés, on effectue une pluralité de mesures. Mais cette solution n'est évidemment pas satisfaisante car elle prend du temps et est donc onéreuse en coût de personnel.

L'invention remédie à ses inconvénients.

Elle concerne un procédé de détermination d'au moins une caractéristique d'une fibre optique à l'aide d'un réflectomètre dans lequel la fibre à caractériser est raccordée à ses deux extrémités à des fibres de référence et on effectue une première mesure de réflectométrie à partir de la première fibre de référence et une deuxième mesure de réflectométrie à partir de la deuxième fibre de référence, ce procédé étant caractérisé en ce que, pour déterminer si les données réflectométriques se rapportant à la fibre à caractériser qui sont obtenues après les deux mesures sont correctes ou non, on compare une donnée réflectométrique en au moins un point de la première fibre de référence à une donnée réflectométrique en au moins un point équivalent de la deuxième fibre de référence, et on conserve les données réflectométriques de la fibre à caractériser seulement si l'écart entre les données comparées est le même pour les deux mesures.

Dans le mode de réalisation préféré, les données réflectométriques comparées des deux fibres de référence sont des valeurs moyennes sur les mêmes longueurs de ces fibres de référence.

De façon plus générale, les données réflectométriques comparées des deux fibres de référence sont des valeurs moyennes sur des segments équivalents de ces fibres de référence, deux segments étant équivalents s'ils sont constitués d'un ensemble de points équivalents.

Ce procédé est particulièrement simple, rapide et sûr, notamment quand les données réflectométriques considérées sont obtenues en additionnant, en échelle logarithmique, pour chaque abscisse, la puissance détectée au cours de la première mesure à la puissance détectée au cours de la seconde mesure, les origines de longueurs étant les mêmes pour ces deux mesures.

Dans une réalisation, les fibres de référence présentent des caractéristiques pratiquement identiques.

Les données réflectométriques sont par exemple utilisées pour déterminer le diamètre de mode de la fibre à caractériser.

Les données réflectométriques peuvent aussi être utilisées pour déterminer la dispersion chromatique de la fibre optique à partir de données réflectométriques obtenues à au moins deux longueurs d'onde.

Selon une réalisation, la dispersion chromatique est obtenue à partir de la formule suivante :

$$D(\lambda) = C_0(\lambda) + \sum_i C_i(\lambda) x(\lambda i),$$

formule dans laquelle $D(\lambda)$ est la dispersion chromatique à la longueur d'onde $\lambda$, $x(\lambda_i)$ est une donnée réflectométrique correspondant à des mesures effectuées à une longueur d'onde $\lambda_i$, et $C_0(\lambda)$ et $C_i(\lambda)$ sont des coefficients dépendant de la longueur d'onde $\lambda$.

Les coefficients $C_0$ et $C_i$ sont par exemple obtenus de façon empirique.

Dans une réalisation de cette dernière disposition, les coefficients $C_0$ et $C_i$ sont obtenus à l'aide d'une pluralité de mesures préliminaires effectuées sur une série de fibres à l'aide d'un appareil de mesure de dispersion chromatique et à l'aide d'un réflectomètre, les coefficients $C_0$ et $C_i$ étant ensuite déterminés par régression linéaire à partir de ces mesures.

Selon un mode de réalisation, $x(\lambda_i)$ a la valeur suivante :

$$x(\lambda_i) = (y_m - y_A)\lambda_i,$$

formule dans laquelle $y_m$ est une valeur moyenne de la donnée réflectométrique à la longueur d'onde $\lambda_j$ de la fibre à caractériser et $y_A$ est une valeur moyenne de la même donnée réflectométrique pour une fibre de référence et à la même longueur d'onde $\lambda_i$.

Selon un autre mode de réalisation, $x(\lambda_i)$ a la valeur:

$$x(\lambda i) = \frac{L_{fopt(\lambda i)} - L_{fopt(\lambda 0)}}{L_{fopt(\lambda 0)}}$$

formule dans laquelle $\lambda_i$ est la longueur d'onde de mesure et $L_{opt(\lambda i)}$ est une longueur optique telle que :

$$L_{opt}(\lambda_i) = \frac{c}{2n_{ref}} T(\lambda_i)$$

$$L_{fopt(\lambda i)} = L_{opt(\lambda i)} - L_{0opt(\lambda i)},$$

$c$ étant la vitesse de la lumière, $n_{ref}$ l'indice de réfraction de référence de la fibre à caractériser et $T(\lambda_i)$ le temps de transit, mesuré par réflectométrie, correspondant au double du temps de transit entre une extrémité d'une fibre de référence et l'extrémité de l'autre fibre de référence,
et $L_{0opt(\lambda i)}$ est la longueur optique des fibres de référence à la longueur d'onde $\lambda_i$.

Le temps de transit $T(\lambda_i)$ peut être déterminé par une recherche de corrélation maximale entre la signature réflectométrique observée pour l'extrémité de l'autre fibre et la signature attendue pour cette extrémité.

La recherche du coefficient de corrélation maximal est par exemple effectuée sur des données réflectométriques incrémentales entre points consécutifs de données, de préférence exprimées en échelle linéaire.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma d'un réflectomètre utilisé pour la mise en oeuvre du procédé selon l'invention,
les figures 2a et 2b sont des diagrammes montrant des étapes d'un procédé de détermination de diamètre de mode,
la figure 3 est un diagramme illustrant un aspect du procédé conforme à l'invention, et
la figure 4 est un autre diagramme montrant une étape d'un procédé pour déterminer la dispersion chromatique d'une fibre optique.

L'invention consiste, selon un premier de ses aspects, à fournir un procédé permettant de déterminer de façon fiable quand une mesure sur une fibre optique effectuée à l'aide d'un réflectomètre (quelquefois aussi appelé banc de rétrodiffusion) a été perturbée ou non par un défaut de connexion au(x) raccord(s) entre la fibre à caractériser et les fibres de références connectées aux extrémités de cette fibre à tester.

L'invention concerne, selon un second de ses aspects (qui peut s'utiliser indépendamment du premier) un procédé pour déterminer la dispersion chromatique à l'aide d'un réflectomètre ou banc de rétrodiffusion.

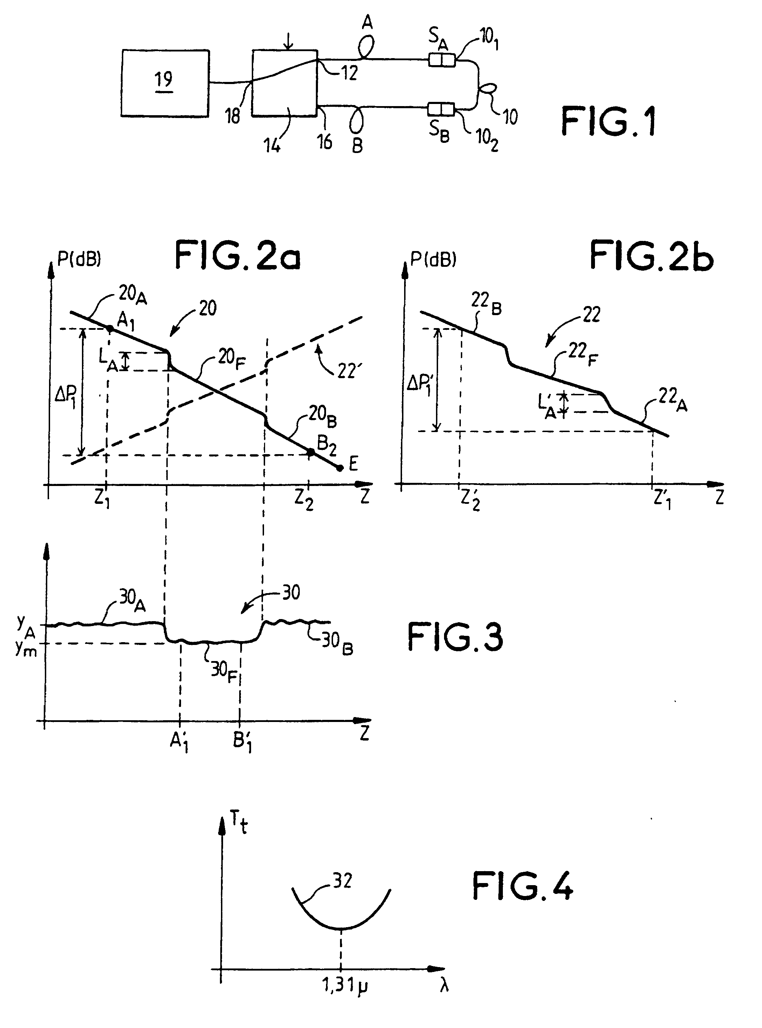

On va tout d'abord décrire le premier aspect de l'invention en relation avec les figures 1 à 3.

On a représenté sur la figure 1 un schéma d'un banc de rétrodiffusion utilisé pour déterminer les paramètres d'une fibre optique 10, notamment le diamètre de mode, le coefficient d'atténuation et la dispersion chromatique.

On rappelle ici le principe d'une telle mesure :

Les imperfections, inévitables, des fibres optiques entraînent une diffusion de l'énergie lumineuse dans toutes les directions. Ainsi, une impulsion lumineuse qui est émise à un temps déterminé à une extrémité de la fibre entraîne, au fur et à mesure de sa propagation, dans cette fibre, une rétrodiffusion qui peut être détectée à la même extrémité. Si au temps t = 0, l'impulsion est émise avec une énergie $P_0$, au bout d'un temps t, l'impulsion a parcouru une distance z dans la fibre. Au bout de ce temps t, l'énergie rétrodiffusée à la distance z est $\eta P_0 e^{-\alpha z}$, $\alpha$ étant le coefficient d'atténuation de la fibre. Ainsi, au temps 2t, à l'extrémité concernée, on capte l'énergie $\eta P_0 e^{-2\alpha z}$.

$\eta$ est appelé le facteur de rétrodiffusion. Il est inversement proportionnel au carré $w^2$ du diamètre de mode w, de la fibre optique.

Pour mesurer le diamètre de mode de la fibre 10, on utilise des fibres de référence (ou fibres étalons) dont le diamètre de mode W est connu.

Ainsi, à l'extrémité $10_1$ de la fibre à caractériser, on raccorde, par une connexion $S_A$, une fibre de référence A et, à l'extrémité $10_2$, on raccorde, par une connexion $S_B$, une deuxième fibre de référence B. Les connexions $S_A$ et $S_B$ sont réalisées, par exemple, à l'aide de rainures d'alignement.

L'extrémité libre 12 de la fibre de référence A est reliée à une première borne d'un commutateur optique 14. Une seconde borne 16 du commutateur optique 14 est reliée à l'extrémité libre de la fibre de référence B.

La troisième borne, ou borne commune, 18 du commutateur 14 est reliée à un appareil 19 générateur d'impulsions lasers et de mesure de l'énergie rétrodiffusée. Le commutateur 14 permet de relier, à volonté, la borne 18 soit à la borne 12, soit à la borne 16.

Pour caractériser le diamètre de mode de la fibre 10, on effectue, au moins pour une longueur d'onde, une mesure de rétrodiffusion par l'extrémité 12 de la fibre de référence A et une mesure de rétrodiffusion par l'extrémité 16 de la fibre de référence B. A cet effet, dans le premier cas, le commutateur 14 relie la borne 18 à la borne 12 et, dans le deuxième cas, le commutateur 14 relie la borne 18 à la borne 16.

Le diagramme de la figure 2a représente la courbe 20 de rétrodiffusion quand l'appareil 19 est connecté à l'extrémité 12 de la fibre de référence A. Sur ce diagramme, on a porté en abscisses la longueur Z exprimée en kilomètres et, en ordonnées, la puissance rétrodiffusée exprimée en dB. La courbe 20 présente une première partie $20_A$ correspondant à la fibre de référence A, une seconde partie $20_F$ correspondant à la fibre 10 et une troisième partie $20_B$ correspondant à la seconde fibre de référence B. Entre les parties $20_A$ et $20_F$, la courbe présente une discontinuité correspondant à une perte $L_A$ dans le raccord $S_A$. De même, entre les sections 20F et $20_B$, la courbe 20 présente une discontinuité correspondant à une perte dans le raccord $S_B$.

La figure 2b est un diagramme analogue à celui de la figure 2a qui représente une mesure de rétrodiffusion effectuée quand le commutateur 14 est dans la seconde position, c'est-à-dire quand l'extrémité 16 de la fibre de référence B est reliée à l'appareil 19 de mesure. Dans ce cas, la courbe 22 de rétrodiffusion présente une première partie $22_B$ correspondant à la fibre de référence B, une deuxième partie $22_F$ correspondant à la fibre 10 à caractériser et une troisième partie $22_A$ correspondant à la fibre de référence A. La courbe 22 présente aussi des discontinuités aux raccords entre les sections $22_B$ et $22_F$ et entre les sections $22_F$ et $22_A$. La première discontinuité correspond au raccord $S_B$ et la seconde discontinuité au raccord $S_A$. Dans ce raccord $S_A$, la perte de puissance est notée $L'_A$.

Pour chaque longueur d'onde $\lambda_j$, on détermine le diamètre de mode de la fibre 10 à partir des valeurs de $L_A$, $L'_A$ et $W_A$, $W_A$ étant le diamètre de mode, connu, de la fibre de référence A.

A cet effet, on effectue la différence $\Delta L$ entre $L_A$ et $L'_A$:

$$\Delta L(\lambda_i) = L_A(\lambda_i) - L'_A(\lambda_i) \tag{1}$$

Le diamètre de mode à la longueur d'onde $\lambda_i$ de la fibre 10 a alors la valeur suivante :

$$W_S(\lambda_J) = W_A(\lambda j).10^{\frac{g/\Delta L(\lambda j)+fj}{20}} \tag{2}$$

Les valeurs de $g_i$ et $f_i$ peuvent être déterminées expérimentalement. Elles sont parfois fixées à 1 et 0 respectivement. Dans ce cas, la formule (2) ci-dessus devient :

$$W_S(\lambda_J) = W_A(\lambda_J).10^{\frac{\Delta L(\lambda j)}{20}} \qquad (2)$$

Les mesures de $L_A$ et de $L'_A$ peuvent être entachées d'erreurs car les valeurs de $L_A$ et de $L'_A$ sont fortement influencées par la qualité des raccords $S_A$ et $S_B$. En effet, le diamètre des fibres étant de l'ordre de quelques microns, ces raccords ne sont pas toujours parfaits, ni parfaitement immobiles.

Étant donné que la précision exigée pour les valeurs de $L_A$ et de $L'_A$ est inférieure à 1/100 de décibel, pour obtenir cette précision, il est, en général, nécessaire d'effectuer, pour chaque fibre et à chaque longueur d'onde, plusieurs mesures et de comparer ces diverses mesures afin de déterminer celles qui sont significatives.

L'invention permet de déterminer rapidement si une mesure est correcte ou non.

A cet effet, on part de la constatation que les sections $20_A$ et $20_B$ de la courbe 20, ainsi que les sections $22_B$ et $22_A$ de la courbe 22 sont connues. Ainsi, on considère un point $A_1$ d'abscisse $z_1$ dans la fibre A et un point analogue (équivalent) $B_2$ d'abscisse $z_2$ de la fibre B. Un point analogue signifie un point dont la distance au raccord $S_B$ est la même que la distance du point $A_1$ au raccord $S_A$. La différence $P_{A1} - P_{B2} = \Delta P_1$ est fonction des pertes entre les abscisses $z_1$ et $z_2$ mais ne dépend pas du sens de circulation de la lumière.

Ainsi, pour vérifier si une mesure est correcte, on détermine $\Delta P_1$ (figure 2a) et $\Delta P'_1$ (figure 2b) et on compare ces valeurs.

Si les valeurs $\Delta P_1$ et $\Delta P'_1$ sont égales, à une tolérance près, la mesure est correcte et il n'est pas nécessaire d'effectuer une autre mesure. Par contre, si les valeurs $\Delta P_1$ et $\Delta P'_1$ s'écartent l'une de l'autre, la mesure n'est pas validée et on procède à une autre mesure.

Dans une variante préférée, les mesures de réflectométrie, notamment, de diamètre de mode, sont effectuées de la manière suivante :

Les résultats de mesures qui correspondent à la figure 2b, c'est-à-dire les résultats de mesures effectuées en partant de la fibre de référence B, sont portés sur le même diagramme que les résultats de mesures effectuées à partir de la fibre de référence A (figure 2a). Mais les résultats de mesures effectuées à partir de la fibre de référence B (commutateur optique 14 reliant les bornes 18 à 16) sont portés sur un diagramme pour lequel les origines sont les mêmes, c'est-à-dire que la courbe 22' (en traits interrompus sur la figure 2a) correspond à une mesure par l'extrémité B et l'origine des abscisses z est (par exemple) à la borne 12 (qui est son extrémité libre à l'opposé de la source laser dans cette mesure). Ainsi, la courbe 22' est analogue à la courbe 22, mais présente une pente inverse.

On effectue la somme, point par point, des données $y_1$ correspondant à la courbe 20 et $y_2$ correspondant à la courbe 22', et on obtient alors la courbe 30 représentée sur le diagramme de la figure 3. Il est important de noter que les données $y_1$ et $y_2$ sont en dB, c'est-à-dire en échelle logarithmique.

Cette courbe 30 comporte trois sections, respectivement $30_A$, $30_F$ et $30_B$ correspondant à la fibre de référence A, à la fibre 10 à caractériser, et à la fibre de référence B. Les sections correspondant aux fibres de référence A et B sont sensiblement horizontales, c'est-à-dire que les données $y = y_1 + y_2$ sont sensiblement constantes pour ces sections.

Si les fibres de référence A et B sont choisies identiques, par exemple en coupant en deux une fibre homogène, les valeurs pour les sections $30_A$ et $30_B$ seront les mêmes.

Pour s'assurer que les données fournies par le réflectomètre sont correctes, on compare les sections $30_A$ et $30_B$. En effet, si les fibres de référence A et B sont identiques, les valeurs $y = y_1 + y_2$ seront, en valeur moyenne, les mêmes pour ces deux sections. Si les fibres de référence A et B ne sont pas identiques, la différence entre les valeurs moyennes y sur chacune des deux sections a une valeur non nulle mais connue à l'avance.

Si la comparaison entre les sections $30_A$ et $30_B$ fournit le résultat attendu, les courbes 20, 22 et 30 sont correctes et les mesures sont retenues et il n'est pas nécessaire d'effectuer de mesure supplémentaire. Par contre, si la comparaison des sections $30_A$ et $30_B$ fournit un résultat différent du résultat attendu, la mesure est incorrecte et doit être refaite.

En pratique, les sections $30_A$ et $30_B$ ne fournissent pas des valeurs qui sont strictement constantes. Dans ces conditions, on effectue une moyenne de y sur des parties des sections $30_A$ et $30_B$ qui correspondent à une même longueur et dont la situation par rapport au raccord correspondant est la même. Par exemple, on considère les sections $30_A$ et $30_B$ à partir d'une même distance d des raccords $S_A$ et $S_B$ et sur une même longueur $d_1$.

Ce procédé de détermination de la fiabilité d'une mesure réflectométrique est utile, non seulement pour déterminer le diamètre de mode, mais pour déterminer toute caractéristique déduite des mesures effectuées avec un réflectomètre. En particulier, comme décrit ci-dessous, on peut déterminer la dispersion chromatique de fibres optiques à l'aide des données fournies par un réiledomètre.

On rappelle ici que la dispersion chromatique traduit le fait que l'indice de réfraction du matériau composant la fibre, en général la silice dopée, dépend de la longueur d'onde de la lumière. Cette dispersion D s'exprime en picosecondes (élargissement des impulsions) par nanomètre (correspondant à une largeur spectrale de source) et par kilomètre (longueur de fibre).

Ainsi, une dispersion chromatique D signifie que, à la longueur d'onde considérée, une impulsion s'élargira de D picosecondes, pour une source de largeur spectrale de 1 nanomètre et pour un kilomètre de la fibre optique.

La dispersion chromatique à une longueur d'onde déterminée est actuellement définie comme constituant la pente, à cette longueur d'onde, de la courbe de variation du temps de transit par kilomètre en fonction de la longueur d'onde.

Ainsi, pour déterminer, une dispersion chromatique, on effectue habituellement des mesures de temps de transit (durée de parcours), dans la fibre, d'impulsions lumineuses à diverses longueurs d'onde, par exemple entre 1,2 et 1,55 µm. Le temps de transit est le temps de parcours de l'impulsion lumineuse d'une extrémité à l'autre de la fibre.

On a représenté sur la figure 4 la courbe de variation du temps Tt de transit en fonction de la longueur d'onde. Cette courbe 32 présente une allure sensiblement parabolique, avec un minimum aux alentours de 1,31 µm. Ainsi, il existe une longueur d'onde $\lambda_0$ pour laquelle la dispersion chromatique est nulle.

Selon un aspect de l'invention, qui peut s'utiliser avec ou sans le procédé de fiabilisation des mesures, on détermine la dispersion chromatique à partir de mesures obtenues avec un réflectomètre.

A cet effet, on peut soit utiliser les données y (figure 3) dites d'émissivité, soit faire appel à un temps de transit dans l'ensemble constitué par les fibres A, 10 et B.

Quand on fait appel aux données y (figure 3), on détermine au préalable de façon empirique la loi reliant, à chaque longueur d'onde, la dispersion chromatique D aux différences $y_m - y_A$ à des longueurs d'onde présélectionnées. Ensuite, la dispersion D se déduit des mesures de $y_m - y_A$ à ces longueurs d'onde présélectionnées.

$y_m$ est la valeur moyenne de y sur la section $30_F$ pour la fibre à caractériser. Toutefois, pour éviter les effets perturbateurs aux raccords $S_A$ et $S_B$, on considère cette valeur moyenne entre des points $A'_1$ et $B'_1$ de la fibre 10 à distance de ces raccords, respectivement $S_A$ et $S_B$.

$y_A$ est la valeur moyenne de y pour la section $30_A$, sans cependant tenir compte de la zone de la fibre de référence qui est proche du raccord $S_A$.

Ainsi, on mesure par réflectométrie ces différences $y_m - y_A$ à deux $(\lambda_1, \lambda_2)$ ou trois $(\lambda_1, \lambda_2, \lambda_3)$ longueurs d'onde, par exemple $\lambda_1$ = 1,31 µm, $\lambda_2$ = 1,55 µm et $\lambda_3$ = 1,4 µm et on en déduit la dispersion chromatique D à une longueur d'onde donnée $\lambda$ à partir de la formule suivante :

$$D(\lambda) = D_0(\lambda) + C_1(\lambda)(y_m-y_A)_{\lambda_1} + C_2(\lambda)(y_m-y_A)_{\lambda_2} + C_3(\lambda)(y_m-y_A)_{\lambda_3} \qquad (3)$$

Dans cette formule, $D_0(\lambda)$ est sensiblement égal à la dispersion chromatique de la fibre de référence A à la longueur d'onde $\lambda$, et $C_1(\lambda)$, $C_2(\lambda)$ et $C_3(\lambda)$ sont des coefficients qui dépendent de la longueur d'onde $\lambda$. Comme indiqué ci-dessus, ces coefficients sont déterminés de façon empirique.

Cette détermination des coefficients $C_1$, $C_2$ et $C_3$ s'effectue sur la base d'une pluralité de mesures préalables sur un nombre significatif de fibres présentant des caractéristiques analogues à celles qui sont à caractériser, notamment des fibres de la chaîne de fabrication considérée.

Par exemple, on détermine les courbes de dispersions chromatiques en fonction de la longueur d'onde pour une centaine de fibres optiques, ces mesures étant réalisées à l'aide d'un appareillage classique de mesure de temps de transit. On effectue également sur chacune de ces fibres des mesures de réflectométrie qui fournissent des valeurs $y_m - y_A$ aux longueurs d'onde $\lambda_1$, $\lambda_2$ et $\lambda_3$. Enfin, à l'aide d'un programme classique de régression linéaire, on calcule, à partir des données de dispersions chromatiques et des données réflectométriques, les coefficients $D_0$, $C_1$, $C_2$ et $C_3$ pour chaque longueur d'onde précédemment mesurée à l'aide d'un appareillage classique.

Ces valeurs de $D_0$, $C_1$, $C_2$ et $C_3$ en fonction de la longueur d'onde sont conservées en mémoire et permettent ensuite de déterminer rapidement la dispersion chromatique à diverses longueurs d'onde des fibres à caractériser, par exemple sortant de la même chaîne de fabrication.

Le second procédé de détermination des dispersions chromatiques part de la constatation qu'un réflectomètre permet de mesurer le temps de transit dans l'ensemble constitué par les fibres A, 10 et B. En effet, il est possible de déterminer l'extrémité E de la courbe 20 (figure 2a), car au-delà de cette extrémité E, les résultats correspondent au bruit de fond du réflectomètre. Comme les mesures sont du type réflectométrique, la donnée au point E correspond au double du temps de transit.

Pour déterminer D, on définit une longueur optique de la ligne formée par les fibres A, 10 et B de la manière suivante :

$$L_{opt}(\lambda_i) = \frac{c}{2n_{ref}} \, T(\lambda_i) \tag{4}$$

Dans cette formule, c est la vitesse de la lumière dans le vide, T est le temps de transit d'aller et de retour à travers les fibres, $n_{ref}$ est un indice de réfraction de référence, et $\lambda_i$ est la longueur d'onde de la source laser.

On procède de la façon suivante :

On mesure les longueurs optiques de la ligne à toutes (deux ou trois) les longueurs d'onde $\lambda_i$ disponibles dans le réflectomètre.

Ensuite, on soustrait de ces longueurs, les longueurs optiques des fibres de référence A et B. Cette différence est notée $L_{fopt(\lambda i)}$, soit :

$$L_{fopt(\lambda i)} = L_{opt(\lambda i)} - L_{0opt(\lambda i)} \tag{5}$$

Dans cette formule, $L_{0opt(\lambda i)}$ est la longueur optique totale des fibres de référence A et B. Cette longueur n'est pas déterminée à chaque mesure, mais constitue une grandeur déterminée au préalable à l'aide de N mesures, N étant par exemple égal à 100. Il est cependant possible de mettre à jour périodiquement cette valeur.

Il est à noter que la longueur optique $L_{0opt(\lambda i)}$ peut comprendre aussi une longueur supplémentaire dans l'appareil 19.

L'étape suivante du procédé consiste à calculer des différences relatives par rapport à une longueur d'onde de référence $\lambda_0$, par exemple 1,31 μm. Cette différence relative correspond à la formule :

$$x(\lambda i) = \frac{L_{fopt(\lambda i)} - L_{fopt(\lambda 0)}}{L_{fopt(\lambda 0)}} \tag{6}$$

Ensuite, la dispersion chromatique D à une longueur d'onde $\lambda$ est déterminée de façon analogue à ce qui a été décrit ci-dessus en relation avec la formule (3), à savoir :

$$D(\lambda) = D'_0(\lambda) + \sum_i K_i(\lambda) x(\lambda i) \tag{7}$$

Les coefficients $D'_0$ et $K_i$ sont déterminés de façon empirique de la même manière qu'indiqué ci-dessus pour les coefficients $D_0$ et $C_i$ dans le cas de la formule (3).

Pour déterminer les longueurs optiques, il faut déterminer la position du point E. A cet effet, on peut mettre en oeuvre un procédé de corrélation qui compare l'aspect (ou signature) de la courbe P à la signature attendue au point E.

**Revendications**

1. Procédé de détermination d'au moins une caractéristique d'une fibre optique à l'aide d'un réflectomètre dans lequel la fibre (10) à caractériser est raccordée à ses deux extrémités à des fibres de référence (A, B) et on effectue une première mesure de réflectométrie à partir de la première fibre de référence (A) et une deuxième mesure de réflectométrie à partir de la deuxième fibre de référence (B), **caractérisé en ce que**, pour déterminer si les données réflectométriques se rapportant à la fibre à caractériser qui sont obtenues après les deux mesures sont correctes ou non, on compare une donnée réflectométrique $(30_A)$ en au moins un point de la première fibre de référence à une donnée réflectométrique $(30_B)$ en au moins un point équivalent de la deuxième fibre de référence, et on conserve les données réflectométriques de la fibre à caractériser seulement si l'écart entre les données comparées est le même pour les deux mesures.

2. Procédé selon la revendication 1, **caractérisé en ce que** les données réflectométriques comparées des deux fibres de référence sont des valeurs moyennes sur des segments équivalents de ces fibres de référence.

3. Procédé selon la revendication 1 ou 2, **caractérisé en ce que** les données réflectométriques considérées sont obtenues en additionnant, en échelle logarithmique, pour chaque abscisse, la puissance détectée au cours de la première mesure à la puissance détectée au cours de la seconde mesure, les origines de longueurs étant les mêmes pour ces deux mesures.

4. Procédé selon l'une quelconque des revendications précédentes, **caractérisé en ce que** les fibres (A, B) de référence présentent des caractéristiques pratiquement identiques.

5. Procédé selon la revendication 3 ou 4, **caractérisé en ce que** les données réflectométriques sont utilisées pour déterminer le diamètre de mode de la fibre (10) à caractériser.

6. Procédé selon l'une quelconque des revendications précédentes, **caractérisé en ce que** les données réflectométriques sont utilisées pour déterminer la dispersion chromatique de la fibre optique à partir de données réflectométriques obtenues à au moins deux longueurs d'onde.

7. Procédé selon la revendication 6, **caractérisé en ce que** la dispersion chromatique est obtenue à partir de la formule suivante :

$$D'(\lambda) = C_0'(\lambda) + \sum_i C_i'(\lambda) x(\lambda i) \qquad (8)$$

formule dons laquelle $D(\lambda)$ est la dispersion chromatique à la longueur d'onde $\lambda$, $x(\lambda_i)$ est une donnée réflectométrique correspondant à des mesures effectuées à une longueur d'onde $\lambda_i$ et $C_0(\lambda)$ et $C_i(\lambda)$ sont des coefficients dépendant de la longueur d'onde $\lambda$.

8. Procédé selon la revendication 7, **caractérisé en ce que** les coefficients $C_0$ et $C_i$ sont obtenus de façon empirique.

9. Procédé selon la revendication 8, **caractérisé en ce que** les coefficients $C_0$ et $C_i$ sont obtenus à l'aide d'une pluralité de mesures préliminaires effectuées sur une série de fibres à l'aide d'un appareil de mesure de dispersion chromatique et à l'aide d'un réflectomètre, les coefficients $C_0$ et $C_i$ étant ensuite déterminés par régression linéaire à partir de ces mesures.

10. Procédé selon l'une quelconque des revendications 7 à 9, **caractérisé en ce que** :

$$x(\lambda_i) = (y_m - y_A)\lambda_i \qquad (9)$$

formule dans laquelle $y_m$ est une valeur moyenne de la donnée réflectométrique à la longueur d'onde $\lambda_i$ de la fibre à caractériser et $y_A$ est une valeur moyenne de la même donnée réflectométrique pour une fibre de référence et à la même longueur d'onde $\lambda_i$.

11. Procédé selon l'une quelconque des revendications 7 à 9, **caractérisé en ce que** :

$$x(\lambda i) = \frac{L_{fopt(\lambda i)} - L_{fopt(\lambda 0)}}{L_{fopt(\lambda 0)}} \qquad (6)$$

formule dans laquelle $\lambda_i$ est la longueur d'onde de mesure et $L_{opt(\lambda i)}$ est une longueur optique telle que :

$$L_{opt}(\lambda_i) = \frac{c}{2n_{ref}} T(\lambda_i) \qquad (4)$$

$$L_{fopt(\lambda i)} = L_{opt(\lambda i)} - L_{0opt(\lambda i)} \qquad (5)$$

c étant la vitesse de la lumière, $n_{ref}$ l'indice de réfraction de référence de la fibre à caractériser et $T(\lambda_i)$ le temps de transit, mesuré par réflectométrie, correspondant au double du temps de transit entre une extrémité d'une fibre de référence et l'extrémité (E) de l'autre fibre de référence,
et $L_{0opt(\lambda i)}$ est la longueur optique des fibres de référence (A, B) à la longueur d'onde $\lambda_i$.

12. Procédé selon la revendication 11, **caractérisé en ce que** le temps de transit $T(\lambda_i)$ est déterminé par une recherche de corrélation maximale entre la signature réflectométrique observée pour l'extrémité de l'autre fibre et la signature attendue pour cette extrémité.

13. Procédé selon la revendication 12, **caractérisé en ce que** la recherche du coefficient de corrélation maximal est effectuée sur des données réflectométriques incrémentales entre points consécutifs de données, de préférence exprimées en échelle linéaire.


**Patentansprüche**

1. Verfahren zur Bestimmung wenigstens einer Eigenschaft einer optischen Faser mit Hilfe eines Reflektometers, wobei die zu charakterisierende Faser (10) an ihren zwei Enden mit Referenzfasern (A, B) verbunden wird und eine erste Reflektometriemessung ausgehend von der ersten Referenzfaser (A) und eine zweite Reflektometriemessung ausgehend von der zweiten Referenzfaser (B) durchgeführt wird,
**dadurch gekennzeichnet,**
**dass**, um zu bestimmen, ob die Reflektometriedaten, welche sich auf die zu charakterisierende Faser beziehen, welche nach den zwei Messungen erhalten werden, korrekt sind oder nicht, einen Reflektometriedatenwert ($30_A$) in wenigstens einem Punkt der ersten Referenzfaser mit einem Reflektometriedatenwert ($30_B$) in wenigstens einem äquivalenten Punkt der zweiten Referenzfaser verglichen wird, und die Reflektometriedaten der zu charakterisierenden Faser nur dann beibehalten werden, wenn der Abstand zwischen den verglichenen Daten für die zwei Messungen der gleiche ist.

2. Verfahren nach Anspruch 1,
**dadurch gekennzeichnet,**
**dass** die verglichenen Reflektometriedaten der zwei Referenzfasern Mittelwerte auf äquivalenten Abschnitten dieser Referenzfasern sind.

3. Verfahren nach Anspruch 1 oder 2,
**dadurch gekennzeichnet,**
**dass** die berücksichtigten Reflektometriedaten erhalten werden, indem im logarithmischen Maßstab für jede Abszisse die im Verlauf der ersten Messung erfasste Leistung zu der im Verlauf der zweiten Messung erfassten Leistung addiert wird, wobei die Längenursprünge für diese beiden Messungen die gleichen sind.

4. Verfahren nach einem beliebigen der vorhergehenden Ansprüche,
**dadurch gekennzeichnet,**
**dass** die Referenzfasern (A, B) praktisch identische Eigenschaften aufweisen.

5. Verfahren nach Anspruch 3 oder 4,
**dadurch gekennzeichnet,**
**dass** die Reflektometriedaten verwendet werden, um den Modendurchmesser der zu charakterisierenden Faser (10) zu bestimmen.

6. Verfahren nach einem beliebigen der vorhergehenden Ansprüche,
**dadurch gekennzeichnet,**
**dass** die Reflektometriedaten dazu verwendet werden, die chromatische Dispersion der optischen Faser ausgehend von bei wenigstens zwei Wellenlängen erhaltenen Daten zu bestimmen.

7. Verfahren nach Anspruch 6,

**dadurch gekennzeichnet,**
**dass** die chromatische Dispersion ausgehend von der folgenden Formel erhalten wird:

$$D(\lambda) = C_0(\lambda) + \sum_i C_i(\lambda) x(\lambda i) \qquad (8),$$

wobei in der Formel $D(\lambda)$ die chromatische Dispersion bei der Wellenlänge $\lambda$ ist, $x(\lambda_i)$ ein Reflektometriedatenwert ist, welcher Messungen entspricht, welche bei einer Wellenlänge $\lambda_i$ durchgeführt wurden, und $C_0(\lambda)$ und $C_i(\lambda)$ von der Wellenlänge $\lambda$ abhängige Koeffizienten sind.

8.  Verfahren nach Anspruch 7,
    **dadurch gekennzeichnet,**
    **dass** die Koeffizienten $C_0$ und $C_i$ auf empirische Weise erhalten werden.

9.  Verfahren nach Anspruch 8,
    **dadurch gekennzeichnet,**
    **dass** die Koeffizienten $C_0$ und $C_i$ mit Hilfe einer Vielzahl von vorbereitenden Messungen erhalten werden, welche auf einer Reihe von Fasern mit Hilfe einer Vorrichtung zur Messung der chromatischen Dispersion und mit Hilfe eines Reflektometers durchgeführt werden, wobei die Koeffizienten $C_0$ und $C_i$ dann durch lineare Regression ausgehend von diesen Messungen bestimmt werden.

10. Verfahren nach einem beliebigen der Ansprüche 7 bis 9,
    **dadurch gekennzeichnet,**
    **dass**:

$$x(\lambda_i) = (y_m - y_A)\lambda_i \qquad (9),$$

wobei in der Formel $y_m$ ein Mittelwert des Reflektometriedatenwerts bei der Wellenlänge $\lambda_i$ der zu charakterisierenden Faser und $y_A$ ein Mittelwert desselben Reflektometriedatenwerts für eine Referenzfaser und bei derselben Wellenlänge $\lambda_i$ ist.

11. Verfahren nach einem beliebigen der Ansprüche 7 bis 9,
    **dadurch gekennzeichnet,**
    **dass**:

$$x(\lambda i) = \frac{L_{fopt(\lambda i)} - L_{fopt(\lambda 0)}}{L_{fopt(\lambda 0)}} \qquad (6),$$

wobei in der Formel $\lambda_i$ die Messwellenlänge und $L_{opt(\lambda i)}$ eine optische Länge ist gemäß:

$$L_{opt}(\lambda_i) = \frac{c}{2n_{ref}} T(\lambda_i) \qquad (4)$$

$$L_{fopt(\lambda i)} = L_{opt(\lambda i)} - L_{0\,opt(\lambda i)} \qquad (5),$$

wobei c die Lichtgeschwindigkeit, $n_{ref}$ der Referenzbrechungsindex der zu charakterisierenden Faser und $T(\lambda_i)$ die durch Reflektometrie gemessene Durchlaufzeit ist, welche dem doppelten der Durchlaufzeit zwischen einem Ende einer Referenzfaser und dem Ende (E) der anderen Referenzfaser entspricht, und $L_{0opt(\lambda i)}$ die optische Länge der Referenzfaser (A, B) bei der Wellenlänge $\lambda_i$ ist.

12. Verfahren nach Anspruch 11,

**dadurch gekennzeichnet,**
**dass** die Durchlaufzeit $T(\lambda_i)$ durch eine Suche der maximalen Korrelation zwischen der reflektometrischen Signatur, welche für das Ende der anderen Faser beobachtet wird, und der für dieses Ende erwarteten Signatur bestimmt wird.

13. Verfahren nach Anspruch 12,
**dadurch gekennzeichnet,**
**dass** die Suche des maximalen Korrelationskoeffizienten auf zwischen aufeinanderfolgenden Datenpunkten zunehmenden Daten durchgeführt wird, welche vorzugsweise im linearen Maßstab dargestellt sind.

**Claims**

1. Method of determining at least one characteristic of an optical fibre with the aid of a reflectometer, wherein the fibre (10) to be **characterised** is connected at its two ends to reference fibres (A, B) and there are carried out a first reflectometric measurement starting from the first reference fibre (A) and a second reflectometric measurement starting from the second reference fibre (B), **characterised in that**, for determining whether or not the reflectometric data relating to the fibre to be **characterised** that are obtained after the two measurements are correct, a reflectometric datum ($30_A$) at at least one point of the first reference fibre is compared to a reflectometric datum ($30_B$) at at least one equivalent point of the second reference fibre, and the reflectometric data of the fibre to be **characterised** are retained only if the difference between the compared data is the same for the two measurements.

2. Method according to claim 1, **characterised in that** the compared reflectometric data of the two reference fibres are mean values over equivalent segments of those reference fibres.

3. Method according to claim 1 or 2, **characterised in that** the reflectometric data considered are obtained by adding, on a logarithmic scale, for each abscissa, the power detected in the course of the first measurement to the power detected in the course of the second measurement, the origins of the lengths being the same for those two measurements.

4. Method according to any one of the preceding claims, **characterised in that** the reference fibres (A, B) have practically identical characteristics.

5. Method according to claim 3 or 4, **characterised in that** the reflectometric data are used to determine the mode diameter of the fibre (10) to be **characterised**.

6. Method according to any one of the preceding claims, **characterised in that** the reflectometric data are used to determine the chromatic dispersion of the optical fibre on the basis of reflectometric data obtained at at least two wavelengths.

7. Method according to claim 6, **characterised in that** the chromatic dispersion is obtained on the basis of the following formula:

$$D(\lambda) = C_0(\lambda) + \sum_i C_i(\lambda) x(\lambda i) \qquad (8)$$

in which formula $D(\lambda)$ is the chromatic dispersion at the wavelength $\lambda$, $x(\lambda_i)$ is a reflectometric datum corresponding to measurements carried out at a wavelength $\lambda_i$, and $C_0(\lambda)$ and $C_i(\lambda)$ are coefficients dependent on the wavelength $\lambda$.

8. Method according to claim 7, **characterised in that** the coefficients $C_0$ and $C_i$ are obtained empirically.

9. Method according to claim 8, **characterised in that** the coefficients $C_0$ and $C_i$ are obtained with the aid of a plurality of preliminary measurements carried out on a series of fibres with the aid of a chromatic dispersion measurement apparatus and with the aid of a reflectometer, the coefficients $C_0$ and $C_i$ then being determined by linear regression based on those measurements.

**10.** Method according to any one of claims 7 to 9, **characterised in that**:

$$x(\lambda_i) = (y_m - y_A)\lambda_i \tag{9}$$

in which formula $y_m$ is a mean value of the reflectometric datum at the wavelength $\lambda_i$ of the fibre to be **characterised** and $y_A$ is a mean value of the same reflectometeric datum for a reference fibre and at the same wavlength $\lambda_i$.

**11.** Method according to any one of claims 7 to 9, **characterised in that**:

$$x(\lambda i) = \frac{L_{fopt(\lambda i)} - L_{fopt(\lambda 0)}}{L_{fopt(\lambda 0)}} \tag{6}$$

in which formula $\lambda_i$ is the measurement wavelength and $L_{opt(\lambda i)}$ is an optical length such that:

$$L_{opt}(\lambda_i) = \frac{c}{2n_{ref}} T(\lambda_i) \tag{4}$$

$$L_{fopt(\lambda i)} = L_{opt(\lambda i)} - L_{0opt(\lambda i)} \tag{5}$$

c being the speed of light, $n_{ref}$ being the reference refraction index of the fibre to be **characterised** and $T(\lambda_i)$ being the transit time, measured by reflectometry, corresponding to twice the transit time between an end of a reference fibre and the end (E) of the other reference fibre,
and $L_{0opt(\lambda i)}$ is the optical length of the reference fibres (A, B) at the wavelength $\lambda_i$.

**12.** Method according to claim 11, **characterised in that** the transit time $T(\lambda_i)$ is determined by a search for maximum correlation between the reflectometric signature observed for the end of the other fibre and the signature expected for that end.

**13.** Method according to claim 12, **characterised in that** the search for the maximum correlation coefficient is carried out on incremental reflectometric data between consecutive data points, preferably expressed on a linear scale.

# FIG.1

A

$S_A$ $10_1$

19

12

18

14 16

B

$S_B$ $10_2$

10

# FIG.2a

P(dB)

$20_A$

$A_1$

$20$

$L_A$

$20_F$

$22'$

$\Delta P_1$

$20_B$

$B_2$

E

$Z_1$ $Z_2$ Z

# FIG.2b

P(dB)

$22_B$

$22$

$22_F$

$\Delta P_1'$

$L_A'$

$22_A$

$Z_2'$ $Z_1'$ Z

# FIG.3

$30_A$

$30$

$y_A$

$y_m$

$30_F$

$30_B$

$A_1'$ $B_1'$ Z

# FIG.4

$T_t$

$32$

$1,31\mu$ $\lambda$